(19)

Europäisches
Patentamt
European
Patent Office
Office européen
des brevets

(11) **EP 2 631 594 B1**

(12) **EUROPEAN PATENT SPECIFICATION**

(45) Date of publication and mention
of the grant of the patent:
**09.09.2015 Bulletin 2015/37**

(51) Int Cl.:
*G01C 21/26* (2006.01)  *G01C 21/34* (2006.01)
*G01C 21/32* (2006.01)  *G09B 29/00* (2006.01)

(21) Application number: **12001179.6**

(22) Date of filing: **22.02.2012**

(54) **Navigation system and method for navigation**

Navigationssystem und Verfahren für Navigation

Système de navigation et procédé de navigation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.08.2013 Bulletin 2013/35**

(73) Proprietor: **Harman Becker Automotive Systems
GmbH
76307 Karlsbad (DE)**

(72) Inventors:
• **Strassenburg-Kleciak, Marek
87548 Garching (bei München) (DE)**
• **Milrakis, Stavros
85551 Kirchheim-Heimstetten (DE)**

(74) Representative: **Grünecker Patent- und
Rechtsanwälte
PartG mbB
Leopoldstraße 4
80802 München (DE)**

(56) References cited:
EP-A1- 1 227 302      WO-A1-2011/047729
GB-A- 2 443 472       US-A1- 2011 231 086

• E.Q.V.MARTINS, M.M.B.PASCOAL, J.L.E. DOS
SANTOS: "Deviations Algorithms for Ranking
Shortest Paths", INTERNATIONAL JOURNAL OF
FOUNDATIONS OF COMPUTER SCIENCE, vol.
10, no. 3, 1 September 1999 (1999-09-01), pages
247-261, XP002680042, ISSN: 0129-0541, DOI:
10.1142/S0129054199000186 [retrieved on
2012-07-16]
• "OpenStreetMap in ArcGIS: Automatisierte
Datenaufbereitung fur Netzwerkanalysen" In: E.
ZIMMERMANN: "Bachelor's Thesis", 30 June
2010 (2010-06-30), KARLSRUHE UNIVERSITY OF
APPLIED SCIENCES
• HENTSCHEL M ET AL: "Autonomous robot
navigation based on OpenStreetMap geodata",
INTELLIGENT TRANSPORTATION SYSTEMS
(ITSC), 2010 13TH INTERNATIONAL IEEE
CONFERENCE ON, IEEE, PISCATAWAY, NJ,
USA, 19 September 2010 (2010-09-19), pages
1645-1650, XP031792631, ISBN:
978-1-4244-7657-2

**Description**

The present invention concerns a navigation system and a method for navigation.

A method for determining a route on the basis of OpenStreetMap map data sets is known from "OpenStreetMap in ArcGIS: Automatisierte Datenaufbereitung für Netzwerkanalysen," Bachelor's Thesis, Karlsruhe University of Applied Sciences [Hochschule Karlsruhe], E. Zimmermann, 30 June 2010.

In the field of geoinformation, networks are used for modeling transportation networks, power grids, and utility networks. In this context, networks are viewed as connected graphs that consist of a geometric / topological arrangement of vertices (nodes) and segment lines (edges). Networks are mathematically defined by graph theory. With networks, network analyses can be carried out in order to calculate relationships within the network.

A graph, also called a network, consists of the triplet of vertices, segment lines, and a rule of assignment. Vertices and segment lines are two disjoint sets. The rule of assignment, also referred to as incidence map, assigns two vertices from the set of vertices to each individual segment line from the set of segment lines.

Transportation networks generally are undirected networks. In this context, vertices that are joined to one another by a segment line are said to be adjacent to one another. A segment line is incident to its vertices. In graph theory, the degree of a vertex is understood to mean the number of its adjacent vertices (neighbors). If the degree of a vertex is 0, it has no adjacent vertices and hence is isolated. In undirected graphs, a distinction is made between ways and paths. A path is a sequence of vertices in which vertices may also be visited multiple times. In a way, by contrast, a vertex may only be traversed a maximum of one time. Vertices are reachable from one another when a way exists between them. A complete graph is a network in which each vertex is connected to every other vertex by segment lines.

In networks, the segment lines can be evaluated by weights. A simple example of such a weight is the length of a segment line, which is also called distance.

The "best ways" method of network analysis has the task of finding the optimal route between two given locations. This may be, for example, the shortest way in terms of distance, the shortest way in terms of time, or the "topologically most favorable way." In the case of the topologically most favorable way, the way with the smallest number of segment lines is sought. However, weightings of segment lines other than distance and time are also possible. A variety of algorithms may be used for calculating the most favorable way.

Dijkstra's algorithm (named after Edsger W. Dijkstra) is often used to calculate the optimal route. This algorithm operates on a transportation network that is defined as a graph with weighted segment lines. The weights, also referred to as costs, generally are the distance between the two vertices of a segment line and/or the average travel time. However, other types of weights are also possible.

Routing is understood to mean the calculation of the best travel route between two or more locations in a transportation network. If the route passes through intermediate points, it is called route planning. The definition of navigation is similar to that of routing. Navigation has the goal of guiding the user to a destination he has chosen. During navigation in a motor vehicle, the current position is determined repeatedly, using a GPS signal for example, and the "optimal route" within the transportation network is determined anew on the basis thereof.

The "OpenStreetMap" (OSM) project was established in 2004. OpenStreetMap is referred to as the "free world map" to which anyone can contribute. The map is being produced as a collaborative effort using the wiki model and is in the category of crowdsourcing. In crowdsourcing, work is sourced to the manpower and intelligence of many volunteer workers. The acquisition of data is also called tagging. This term is based on assignment of attributes to data, which in OSM takes place with so-called OSM tags.

The OSM data model constitutes the basis for the model of the OSM database, in which the data are stored, and for the XML format (Extensible Markup Language) (*.osm), which is used for exchanging OSM data. The underlying data model is structured very simply. It contains only three data types: nodes, ways, and relations, which are represented in the OSM XML format by XML tags (<node>, <way>, <relation>). Nodes are used to represent objects with a point nature, such as anchor points of linear objects, and also Points of Interest. Ways are primarily used to create linear objects. Ways are composed of a sequence of nodes. Accordingly, a way can be called a polygonal chain. A polygonal chain is the trace of a way that is composed of a finite number of line segments.

In geodesy, polygonal chains are the most important measurement lines for detailed terrestrial surveys. A polygonal chain has the elements polygon points, also known as vertices, and polygon sides, also called segment lines, and angles, wherein each angle is defined between two polygon sides adjacent to one another at the vertex.

In OpenStreetMap, the order of the referenced nodes indicates the direction of the way. Relations are used to define relationships between different objects such as nodes, ways, or relations themselves. Nodes, ways, and relations that participate in a relation are called members. Turning rules are an example of relations.

The node, way, and relation XML tags contain, firstly, XML attributes (for example, id) and possibly a number of additional XML tags (for instance, <nd>). Any desired number of tags can be assigned to a basic data type (node, way, relation). OSM tags are used to assign properties to nodes, ways, and relations, and consist of a key/value pair. In this regard, the key (k) is a key, and the value (v) is the value that relates to the key.

In most cases, roads in OpenStreetMap are recorded using the highway OSM tag. With few exceptions, roads are ways. Road classification is accomplished by means of the value of the highway key. In order to define roads precisely, additional OSM tags are used, for instance in order to assign the street name (name OSM tag), the highway or route number/reference (ref OSM tag), or access restrictions. For large areas, for example for rural areas and in some cases for entire cities in developing or newly industrialized countries, the road classification is absent, however.

In OSM format, the referenced nodes of a way represent the anchor points. Thus, nodes that are referenced by at least two ways (highway) are junctions (cross points). At such junctions, it is possible to change from one way to the other.

A car mounted navigation system is known from DE 41 04 351 A1. This system uses map data of polygons defined by roads of a predetermined rank or other important feature, connects a starting polygon containing a starting point to a destination polygon containing a destination through a chain of contiguous polygons, wherein a pair of adjoining polygons contains a common side and the polygons are located between the starting polygon and the destination polygon, so that a plurality of routes between the starting point and the destination polygon can be calculated. Each route consists of a combination of the sides of the polygons from the chain, those of the starting polygon, and those of the destination polygon. A vehicle operator chooses a suitable route from the routes that have been calculated.

GB 2 443 472 A discloses the prioritization of a set of routes being polygonal chains according to length. M.Hentschel and B.Wagner, "Autonomous Robot Navigation Based on OpenStreetMap Geodata", ITSC 2010, pages 1645-1650, discloses route calculations using e.g. the A* algorithm, where the geodata are based on ways of polygonal chains.

The object of the invention is to specify a method for navigation by means of a route, wherein map data may have inadequate attribute assignment in some cases.

This object is attained by a method with the features of independent claim 1. Advantageous refinements are the subject matter of dependent claims and are contained in the description.

Accordingly, a method for navigation by means of a route is provided.

In the method, map data of a map section are retrieved from a database. The map data have polygonal chains. Each polygonal chain has vertices and segments.

In the method, a value of a parameter of a geometric property of the polygonal chains is determined by means of a computing unit for each of a plurality of polygonal chains of ways of the map section.

In the method, a first number of the plurality of polygonal chains and a second number of the plurality of polygonal chains are determined by means of the computing unit from the map data by evaluation of the values of the parameter.

In the method, first segments of the polygonal chains of the first number are assigned a first rank by means of the computing unit. Second segments of the polygonal chains of the second number are assigned a second rank. The first segments have priority over the second segments for determining the route.

Several advantages are achieved by a concrete implementation of the method, such as is explained in detail with regard to exemplary embodiments in the figures. Routing is significantly improved in map regions with inadequate attribute assignment. Moreover, map regions with and without attribute assignments can be used together in a route calculation.

The invention has the additional object of specifying a navigation system that is improved to the greatest extent possible.

This object is attained by the navigation system with the features of independent claim 8. Advantageous refinements are contained in the description.

Accordingly, a navigation system for navigation by means of a route is provided.

The navigation system has a database, which has retrievable map data of a map section. The map data have polygonal chains. Each polygonal chain has vertices and segments.

The navigation system has a computing unit. The computing unit is configured to determine a value of a parameter of a geometric property of the polygonal chains for each of a plurality of polygonal chains of ways of the map section.

The computing unit is configured to determine a first number of polygonal chains and a second number of polygonal chains from the map data by evaluation of the values of the parameter.

The computing unit is configured to assign a first rank to first segments of the polygonal chains of the first number and to assign a second rank to second segments of the polygonal chains of the second number. The first segments have priority over the second segments for determining the route.

The embodiments described below relate to both the method and to the navigation system. Method features can be derived from functions of the navigation system here. Functions of the navigation system are the implementation of method features.

Preferably the route is calculated at least partially based on the first segments. In advantageous fashion, the first segments are emphasized over the second segments during navigation.

Preferably the map data are obtained from a free database such as OpenStreetMap. In an advantageous embodiment, the map section is generated automatically. In advantageous fashion, the map section is determined based on a starting point and a destination point of the route.

In OpenStreetMap (OSM), for example, the polygonal chains are labeled as "ways," and are organized there as tags. The polygonal chains are permanently stored in the database, and hence are predefined, so they need not first be determined from the segments. As a result of this definition of the polygonal chains in the database, the segments are not independent of one another, but rather are joined together into polygonal chains. Polygonal chains that can be used for calculating a route are labeled as "highways" in OpenStreetMap, for example.

The possible geometric properties of a polygonal chain are limited by the mathematical definition of the polygonal chain. In the following, the preferred geometric properties of the polygonal chain are specified by means of one parameter in each case. Geometric properties of a polygonal chain are limited using vertices and/or segment lines and/or angles between segment lines.

In an advantageous embodiment, a length of each polygonal chain is determined as a geometric property. To this end, the sum of the lengths of the segments is determined as the parameter. No vector addition takes place here, but instead the length of each segment is calculated individually using the coordinates of the two associated vertices. Each polygonal chain is then assigned to the first number or to the second number based on the length.

The assignment of the polygonal chain to the first number or to the second number takes place, for example, in that each polygonal chain with a length greater than a first threshold is assigned to the first number and in that each polygonal chain with a length less than the first threshold is assigned to the second number. The first threshold is, e.g., predefined or is, e.g., calculated such that 90% of the polygonal chains have a length less than the first threshold. It is likewise possible to calculate the first threshold as a function of density of the polygonal chains in the map section.

In another advantageous embodiment, a length ratio of lengths of the polygonal chain is determined as a geometric property. To this end, the length ratio of a distance between a first vertex and a last vertex to a length of the associated polygonal chain is determined as the parameter. In this process, the length of the polygonal chain is once again determined by means of the sum of the lengths of the segments. Each polygonal chain is assigned to the first number or the second number based on the length ratio.

The assignment of the polygonal chain to the first number or to the second number takes place, for example, in that each polygonal chain with a ratio greater than a second threshold is assigned to the first number and in that each polygonal chain with a ratio less than the second threshold is assigned to the second number. The second threshold is, e.g., predefined or is, e.g., calculated such that 90% of the polygonal chains have a ratio less than the second threshold. It is likewise possible to calculate the second threshold as a function of the density of the polygonal chains in the map section.

In another advantageous embodiment, an angle sum of each polygonal chain is determined as a geometric property. To this end, a sum of all angles between each pair of segments is determined as the parameter. In geodesy, the angle of two segments that align is specified as 180°. However, a definition is also possible in which the angle of two segments that align is 0°. Each polygonal chain is assigned to the first number or to the second number based on the sum of the angles.

The assignment of the polygonal chain to the first number or to the second number takes place, for example, in that each polygonal chain with an angle sum greater than a third threshold is assigned to the first number and in that each polygonal chain with an angle sum less than the third threshold is assigned to the second number. The third threshold is calculated, for example, such that 90% of the polygonal chains have an angle sum less than the third threshold. It is likewise possible to calculate the third threshold as a function of the density of the polygonal chains in the map section.

In another advantageous embodiment, an average of the angles of each polygonal chain is determined as a geometric property. Here, the average of all angles between two segments is determined as the parameter. Each polygonal chain is assigned to the first number or to the second number based on the average of the angles that has been determined.

The assignment of the polygonal chain to the first number or to the second number takes place, for example, in that each polygonal chain with an average of the angles greater than a fourth threshold is assigned to the first number and in that each polygonal chain with an average of the angles less than the fourth threshold is assigned to the second number. The fourth threshold is, e.g., predefined or is, e.g., calculated such that 85% of the polygonal chains have an average of the angles less than the fourth threshold. It is likewise possible to calculate the fourth threshold as a function of the density of the polygonal chains in the map section.

In another advantageous embodiment an angle-to-length ratio is determined as a geometric property. Here, the ratio of an average of the angles to the length of the polygonal chain is determined as the parameter. The length of the polygonal chain is determined by means of the sum of the lengths of the segments. Each polygonal chain is assigned to the first number or to the second number based on the angle-to-length ratio.

The assignment of the polygonal chain to the first number or to the second number takes place, for example, in that each polygonal chain with an angle-to-length ratio greater than a fifth threshold is assigned to the first number and in that each polygonal chain with an angle-to-length ratio less than the fifth threshold is assigned to the second number. The fifth threshold is, e.g., predefined or is, e.g., calculated such that 80% of the polygonal chains have an angle-to-length ratio less than the fifth threshold. It is likewise possible to calculate the fifth threshold as a function of the density of the polygonal chains in the map section.

In an especially preferred embodiment, values of at least two parameters of different geometric properties are determined. The first number and the second number of the polygonal chains are determined on the basis of the at least two parameters. Accordingly, the polygonal chains of the map section are assigned to the first number or to the second number on the basis of the at least two parameters.

The assignment of the polygonal chain in question to the first or second number takes place in multiple steps, for example. In a first step, each polygonal chain is evaluated using a first parameter, for instance in that each polygonal chain with a length less than the first threshold is assigned to the second number. Each polygonal chain that is not assigned to the second number, for example which has a length greater than the first threshold, is evaluated with respect to a second parameter. For evaluating the second parameter, the polygonal chain in question is assigned to the first number if it has an angle-to-length ratio greater than a second threshold, whereas the polygonal chain is likewise assigned to the second number if it has an angle-to-length ratio less than the second threshold.

The embodiments described above are especially advantageous, both individually and in combination. All embodiments may be combined with one another. Some possible combinations are explained in the description of the exemplary embodiments from the figures. However, these possibilities of combinations of the embodiments introduced there are not exhaustive.

The invention is explained in detail below by means of exemplary embodiments with reference to drawings.

They show

Fig. 1      a map section,

Fig. 2a      a polygonal chain,

Fig. 2b      another polygonal chain,

Fig. 2c      another polygonal chain,

Fig. 3      a road network,

Fig. 4      a schematic view of a navigation system, and

Fig. 5      a schematic flowchart.

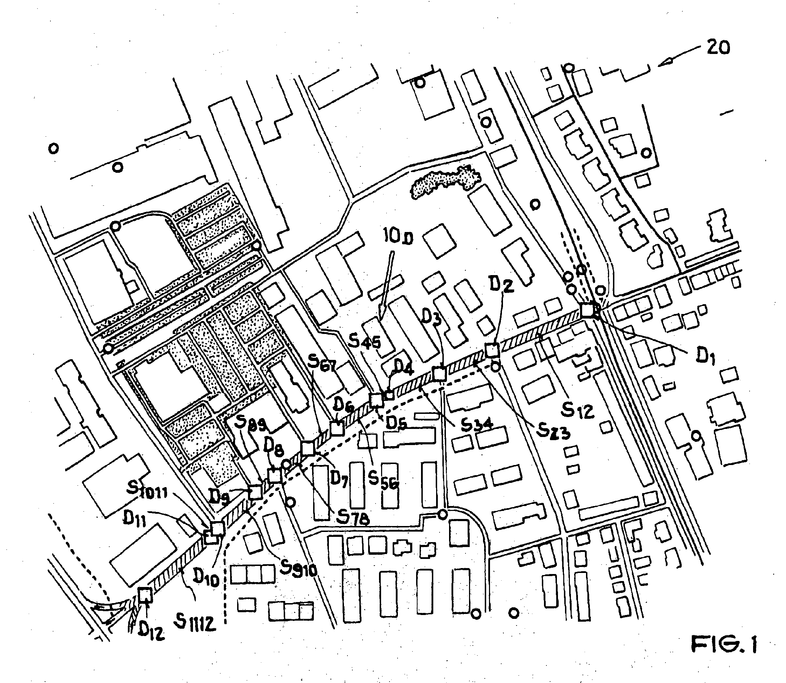

An exemplary map section 20 is shown schematically in Fig. 1. The map section 20 shows a road network, buildings, and other areas. Highlighted in the map section 20 is a polygonal chain 10D with the vertices $D_1$, $D_2$, $D_3$, $D_4$, $D_5$, $D_6$, $D_7$, $D_8$, $D_9$, $D_{10}$, $D_{11}$, and $D_{12}$. The vertices $D_1$, $D_2$, $D_3$, $D_4$, $D_5$, $D_6$, $D_7$, $D_8$, $D_9$, $D_{10}$, $D_{11}$, and $D_{12}$ are connected to one another by segments $S_{12}$, $S_{23}$, $S_{34}$, $S_{45}$, $S_{56}$, $S_{67}$, $S_{78}$, $S_{89}$, $S_{910}$, $S_{1011}$, and $S_{1112}$.

OpenStreetMap contains a similar polygonal chain, which is labeled as a way and has the identification 30121019. The database entry there is labeled as a tag, and can contain the following information:

Tags: highway = unknown
maxspeed = unknown
name = Maaßstraße

Nodes: 266611432 (Also part of ways Maaßstraße (33056650), Adlerstraße (24516725), and Adlerstraße (30121020))
271359038 (Also part of way Haueckenweg (24972239))
262447883 (Also part of way Rutlindisweg (24972238))
262447884
275626000 (Also part of way 25304025)

273684848 (Also part of way 27639756)
277820615 (Also part of way 27639755)
262447886 (Also part of way Sandwingert (24504008))
269692032 (Also part of way 24824502)

266611424 (Also part of way Im Schuhmachergewann (24516724))
271355211 (Also part of way 24971899)
271355191 (Also part of ways 24971896, 99078476, and 24971897)

Part Relation De_RNV_34 (48631)

of: Relation De_RNV_1009 (64577)
Relation De_RNV_M2 (62101)

In the data, the attribute "highway" indicates that this is a routable polygonal chain $10_D$, with the value of the "highway" key missing. Accordingly, this polygonal chain would have only inadequate attribute assignment for routing.

The map data of the map section 20 in the figure include a plurality of polygonal chains, which can be labeled as ways. The polygonal chains are predefined. The polygonal chains are stored as highways in the database, for example the database of OpenStreetMap, which is to say that these predefined polygonal chains are not determined from segments, but rather are already present in the database and have the segments. The segments may also be referred to as line segments.

The goal is to find, from among the plurality of polygonal chains, the polygonal chains that can be used with priority for a route. In this routing process, roads with a higher level of prioritization usually are used with precedence for creating the route in the calculation algorithm. If no attributes for the polygonal chains are present in a map section, the route is determined in the calculation algorithm without prioritization, which is to say solely based on the weight / the costs of the segments of the polygonal chains.

Navigation in a map section 20 without adequate attributes, based on road data from OpenStreetMap for example, preferably will lead to the destination by the shortest route. Map sections without adequate attributes arise where recording has taken place solely on the basis of satellite images and without local knowledge. In the case of roads whose course has been obtained solely on the basis of aerial or satellite images (or using other recording criteria but without local knowledge), it is oftentimes impossible for a human being or for the algorithm to assign an attribute for prioritization to the polygonal chains. Accordingly, attributes are missing for entire districts or neighborhoods. Consequently, it is easily possible for a driver to be navigated through a section of road that is virtually impassable because of poor road quality even though it can be seen on the aerial image.

Roads with a higher prioritization level, such as, e.g., an expressway or a highway, frequently have a special geometric property. Under the assumption that longer, straight polygonal chains are more likely to represent more important transport axes than short polygonal chains, polygonal chains are identified in the road network that in all probability play a primary role in road traffic. Even if representation of the streets associated with these polygonal chains is not specifically performed on the navigation display, segments of these polygonal chains can be used for route calculation, as can segments with a higher level than the next closest streets, wherein the next closest streets do not have the special geometric property.

The assumption is justified by the fact that the primary connecting routes between neighborhoods or localities are the first to be built, even when growth of new cities and settlements is rapid. These connections are generally the longest and fastest. Accordingly, the associated polygonal chains have these geometric properties.

The map section 20 is determined, for example, using a region stored in the map data, e.g., the administrative area "city", within the program execution for route calculation based on starting point and destination. It is likewise possible to determine the map section 20 using the street density per unit area (square kilometers).

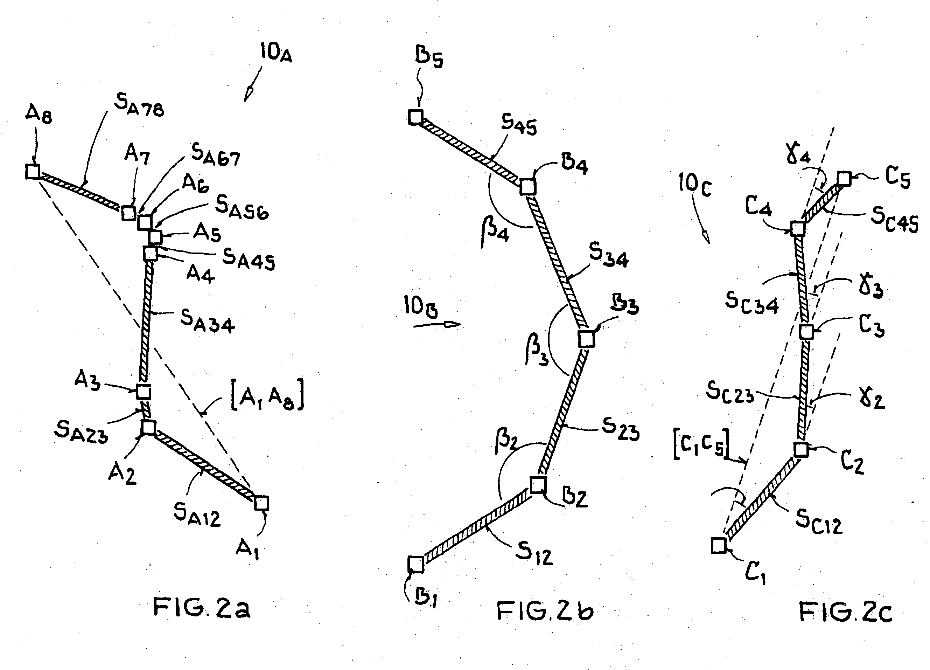

An evaluation of the geometric property of the polygonal chains $10_A$, $10_B$, $10_C$ by means of a number of parameters L, $V_L$, $\beta_S$, $\beta_M$, $V_\beta$, $\gamma_S$, $\gamma_M$ is explained in detail using the exemplary embodiments relating to Figures 2a, 2b, and 2c. For a plurality of polygonal chains $10_A$, $10_B$, $10_C$ of ways of the map section 20, a value of a parameter L, $V_L$, $\beta_S$, $\beta_M$, $V_\beta$, $\gamma_S$, $\gamma_M$ of a geometric property of the polygonal chains $10_A$, $10_B$, $10_C$ is determined by means of a computing unit for each polygonal chain $10_A$, $10_B$, $10_C$ in the map section 20 that is without attributes.

Fig. 2a schematically shows an exemplary embodiment for a polygonal chain $10_A$. The polygonal chain $10_A$ of a way has the starting vertex $A_1$ and the end vertex $A_8$ and the anchor vertices $A_2$, $A_3$, $A_4$, $A_5$, $A_6$, and $A_7$ located between starting vertex $A_1$ and end vertex $A_8$. The segments $S_{A12}$, $S_{A23}$, $S_{A34}$, $S_{A45}$, $S_{A56}$, $S_{A67}$, and $S_{A78}$ are defined between the vertices $A_1$, $A_2$, $A_3$, $A_4$, $A_5$, $A_6$, $A_7$, and $A_8$. In addition, the additional distance segment between the starting vertex $A_1$ and the end vertex $A_8$ of the polygonal chain $10_A$ is sketched in the exemplary embodiment from Fig. 2a.

The geometric property of the length L of the polygonal chain shall be explained using the polygonal chain $10_A$ in the exemplary embodiment from Fig. 2a.

Here in the exemplary embodiment from Fig. 2a, the length L is the sum of the line segments of the polygon $10_A$:

$$L_{10A} = \overline{A_1A_2} + \overline{A_2A_3} + \overline{A_3A_4} + \overline{A_4A_5} + \overline{A_5A_6} + \overline{A_6A_7} + \overline{A_7A_8} \qquad (1)$$

When the length L of all polygonal chains in the map section 20 is determined in this way as the parameter L, then 10% of the longest polygonal chains, for example, can be assigned to a first number M and the remaining polygonal chains can be assigned to a second number N. This results in a threshold $th_L$, with the aid of which the 10% or the 90% are associated with the first number M or the second number N, respectively.

Another possibility in the exemplary embodiment from Fig. 2a is to form a length ratio $V_L$, where the parameter $V_L$ is defined as:

$$V_L = \frac{\overline{A_1A_8}}{L_{10A}} \qquad (2)$$

Here, $L_{10A}$ is the length stated in equation (1) of the polygonal chain and $A_1A_8$ is the distance between the starting vertex $A_1$ and the end vertex $A_8$. The length ratio $V_L$ thus specifies whether or not the road defined by the polygonal chain deviates sharply from the distance as the crow flies, such as in the case of a winding road, for example. Here another threshold $th_{VL}$ may be used.

Another polygonal chain $10_B$ is shown schematically in Fig. 2b. The polygonal chain $10_B$ of a way has the starting vertex $B_1$ and the end vertex $B_5$ and the anchor vertices $B_2$, $B_3$, and $B_4$ located between starting vertex $B_1$ and end vertex $B_5$. The segments $S_{B12}$, $S_{B23}$, $S_{B34}$, and $S_{B45}$ are defined between the vertices $B_1$, $B_2$, $B_3$, $B_4$, $B_5$. In addition, angles $\beta_1$, $\beta_2$, $\beta_3$, and $\beta_4$ between the segments $S_{B12}$, $S_{B23}$, $S_{B34}$, $S_{B45}$ are shown in the exemplary embodiment from Fig. 2b.

When the polygonal chain $10_B$ deviates from a straight line, at least one of the angles $\beta_1$, $\beta_2$, $\beta_3$, $\beta_4$ is less than 180°. If the road is particularly contorted geometrically, the sum of the angles is correspondingly smaller as compared with a predominantly straight road.

Here, the angle sum $\beta_S$ in the exemplary embodiment from Fig: 2a is:

$$\beta_S = \beta_1 + \beta_2 + \beta_3 + \beta_4 \qquad (3)$$

The angle sum $\beta_S$ may be compared with another threshold $th_{\beta S}$.

In this context it is also possible to take into account the number $K_\beta$ of angles and calculate an angle average $\beta_M$, so that the parameter $\beta_M$ is:

$$\beta_M = \frac{\beta_S}{K_\beta} \qquad (4)$$

If the average $\beta_M$ of the angles of all polygons in the map section 20 is determined, then 10% of the polygonal chains with the largest average $\beta_M$ of the angles, for example, can be assigned to a first number M and the remaining polygonal chains can be assigned to a second number N. This results in a threshold $th_{\beta M}$ with the aid of which the 10% are associated with the first number M and the 90% are associated with the second number N. It is also possible to provide a third number and a fourth number with a further subdivision.

Another possibility in the exemplary embodiment from Fig. 2b is for a ratio $V_\beta$ of the angle average $\beta_M$ to the length L of the polygon to be determined as the parameter $V_\beta$, where the following holds:

$$V_\beta = \frac{\beta_M}{L} \qquad (5)$$

Here, the length L in the exemplary embodiment from Fig. 2b is:

$$L = \overline{B_1 B_2} + \overline{B_2 B_3} + \overline{B_3 B_4} + \overline{B_4 B_5} \qquad\qquad (6)$$

Parameter $V_\beta$ may be compared with another threshold $th_{V\beta}$.

An additional polygonal chain $10_C$ is shown schematically in Fig. 2c. The polygonal chain $10_C$ of a way has the starting vertex $C_1$ and the end vertex $C_5$ and the anchor vertices $C_2$, $C_3$, and $C_4$ located between starting vertex $C_1$ and end vertex $C_5$. The segments $S_{C12}$, $S_{C23}$, $S_{C34}$, and $S_{C45}$ are defined between the vertices $C_1$, $C_2$, $C_3$, $C_4$, $C_5$. In addition, an additional line segment $[c_1\, c_5]$ is sketched between the starting vertex $C_1$ and the end vertex $C_5$ in the exemplary embodiment from Fig. 2c.

In the exemplary embodiment from Fig. 2c, an angular deviation $\gamma_1$, $\gamma_2$, $\gamma_3$, $\gamma_4$ from the direction of the additional line segment $[c_1\, c_5]$ is determined for each segment $S_{C12}$, $S_{C23}$, $S_{C34}$, and $S_{C45}$. The sum $\gamma_S$ of the angular deviations $\gamma_1$, $\gamma_2$, $\gamma_3$, $\gamma_4$ in the exemplary embodiment from Fig. 2c can be calculated as the parameter $\gamma_S$ using:

$$\gamma_S = \gamma_1 + \gamma_2 + \gamma_3 + \gamma_4 \qquad\qquad (7)$$

Again, it is possible to compare the parameter $\gamma_S$ with another threshold $th_{\gamma S}$.

It is likewise possible here to additionally take into account the number $K_\gamma$ of the angles and to calculate an angle deviation average $\gamma_M$, so that the parameter $\gamma_M$ is:

$$\gamma_M = \frac{\gamma_S}{K_\gamma} \qquad\qquad (8)$$

If the average $Y_M$ of the angular deviations of all polygons in the map section 20 is determined, then 15% of the polygonal chains with the largest average $\gamma_M$ of the angle can be assigned to a first number M, for example, and the remaining polygonal chains can be assigned to a second number N. This results in a threshold $th_{\gamma S}$ or $th_{\gamma M}$ with the aid of which the 15% are associated with the first number M and the 85% are associated with the second number N. It is also possible to provide a third number and a fourth number with a further subdivision using additional thresholds.

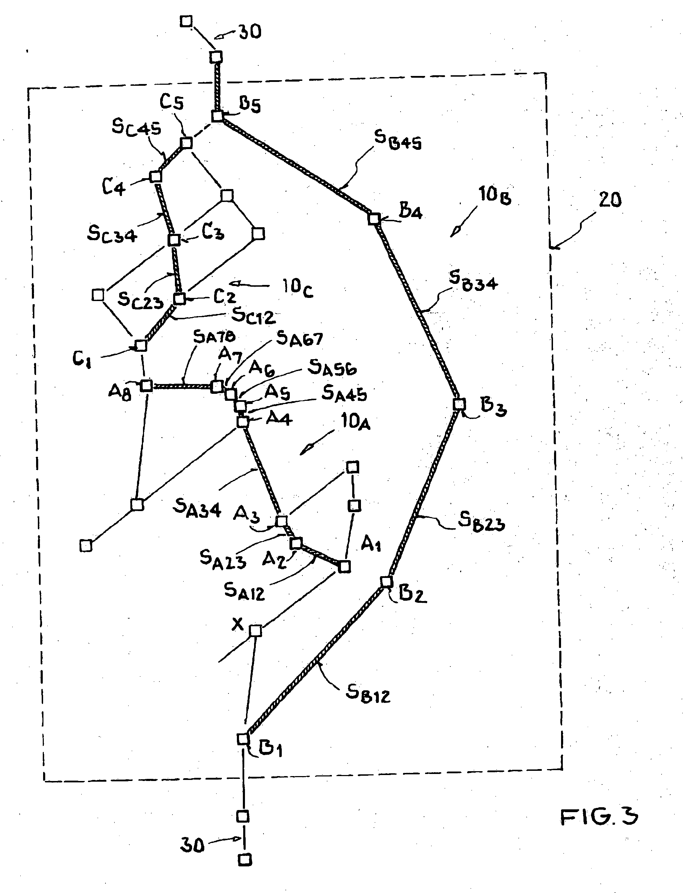

Fig. 3 schematically shows a map section 20 with multiple polygonal chains $10_A$, $10_B$, $10_C$. Based on one or more of the parameters L, $V_L$, $\beta_S$, $\beta_M$, $V_\beta$, $\gamma_S$, $\gamma_M$ discussed with reference to Figures 2a, 2b, 2c, a first number M of polygonal chains $10_B$ and a second number N of polygonal chains $10_A$, $10_C$ are determined from map data through evaluation of the values of the parameters L, $V_L$, $\beta_S$, $\beta_M$, $V_\beta$, $\gamma_S$, $\gamma_M$ that are used. In this process, a multistep evaluation is possible, for example, using the parameters L, $V_L$, $\beta_S$, $\beta_M$, $V_\beta$, $\gamma_S$, $\gamma_M$ in that, for instance, the polygonal chains $10_A$, $10_B$, $10_C$ that are longer than 70% of the polygonal chains are determined in a first step by means of the parameter length L of the polygonal chains. And in a second step after that, the remaining 30% of the polygonal chains $10_A$, $10_B$, $10_C$ are evaluated with respect to the parameter $V_\beta$ of the ratio $V_\beta$ of the angle average $\beta_M$ to the length L.

In the exemplary embodiment from Fig. 3, only the polygonal chain $10_B$ has a value of the ratio $V_\beta$ greater than a threshold $th_{V\beta}$. Accordingly, only the polygonal chain $10_B$ is assigned to the first number M.

Subsequently, first segments $S_{B12}$, $S_{B23}$, $S_{B34}$, and $S_{B45}$ of the polygonal chain $10_B$ of the first number M are assigned a first rank R=2. Second segments $S_{A12}$, $S_{A23}$, $S_{A34}$, $S_{A45}$, $S_{A56}$, $S_{A67}$, $S_{C12}$, $S_{C23}$, $S_{C34}$, and $S_{C45}$ of the polygonal chains $10_A$, $10_C$ of the second number N are assigned a second rank R=1. In the exemplary embodiment from Fig. 3, the polygonal chain $10_B$ is a bypass road. In contrast, the polygonal chains $10_A$, $10_C$ are merely relatively long streets within the town and are to be accorded lower priority for optimization of a route 30.

After the assignment of the polygonal chains $10_A$, $10_B$, $10_C$ to the first number M with the first rank R=2 and the second number N with the second rank R=1, a route calculation takes place as a function of the rank R of the Segments $S_{B12}$, $S_{B23}$, $S_{B34}$, and $S_{B45}$, or $S_{A12}$, $S_{A23}$, $S_{A34}$, $S_{A45}$, $S_{A56}$, $S_{A67}$, $S_{C12}$, $S_{C23}$, $S_{C34}$, and $S_{C45}$ of the polygonal chains $10_A$, $10_B$, $10_C$. In this context, the first segments $S_{B12}$, $S_{B23}$, $S_{B34}$, and $S_{B45}$ have priority over the second segments $S_{A12}$, $S_{A23}$, $S_{A34}$, $S_{A45}$, $S_{A56}$, $S_{A67}$, $S_{C12}$, $S_{C23}$, $S_{C34}$, and $S_{C45}$ for determining the route 30.

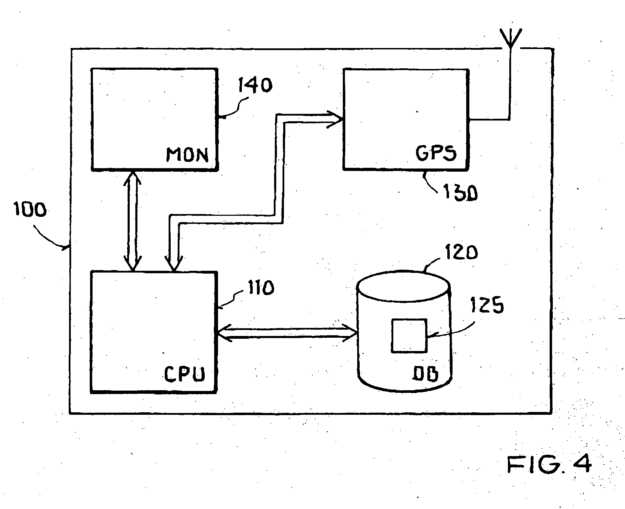

An example for a navigation system 100 is shown schematically in Fig. 4 as a block diagram. The navigation system 100 has a computing unit 110, which is connected to a database 120 that contains map data 125. In addition, the computing unit 110 is connected to a display 140, for example a touchscreen, and to a positioning unit 130, for example a GPS receiver. The database 120 has retrievable map data 125 of a map section 20.

The map data 125 have predetermined polygonal chains. The polygonal chains are also called "ways" in OpenStreetMap, for example. Each polygonal chain $10_A$, $10_B$, $10_C$, $10_D$ has vertices $A_1 \ldots A_8$, $B_1 \ldots B_5$, $C_1 \ldots C_5$, $D_1 \ldots D_{12}$ with a starting vertex and an end vertex, and anchor vertices located between the starting vertex and the end vertex. Each polygonal chain also has segments $S_{A12} \ldots S_{A78}$, $S_{B12} \ldots S_{B45}$, $S_{C12} \ldots S_{C45}$, $S_{12} \ldots S_{1112}$, such as are shown by way of example in Figures 1, 2a, 2b, 2c and 3.

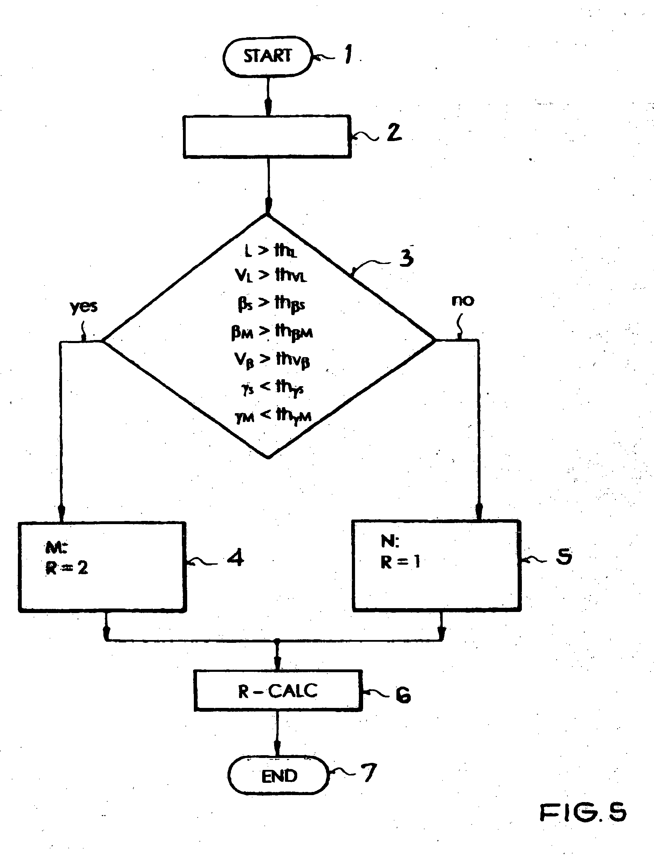

The computing unit 110 is configured to carry out a method for navigation, which is explained in detail with reference to the schematic flowchart from Fig. 5.

Fig. 5 shows steps 1 through 7 of the method. In the first step 1, a route calculation is started, for example. The computing unit 110 is configured to determine, in the second step 2, a value of a parameter $L$, $V_L$, $\beta_S$, $\beta_M$, $V_\beta$, $\gamma_S$, $\gamma_M$ of a geometric property of the polygonal chains $10_A$, $10_B$, $10_C$, $10_D$ for each of a plurality of polygonal chains $10_A$, $10_B$, $10_C$, $10_D$ of ways of the map section 20.

The computing unit 110 is configured to determine, from the map data 125, a first number M of polygonal chains $10_B$ in the fourth step 4, and a second number N of polygonal chains $10_A$, $10_C$ in the fifth step 5. To this end, values of the parameter $L$, $V_L$, $\beta_S$, $\beta_M$, $V_\beta$, $\gamma_S$, $\gamma_M$ are evaluated in the preceding third step 3. In the exemplary embodiment from Fig. 5, parameter $L$, $V_L$, $\beta_S$, $\beta_M$, $V_\beta$, $\gamma_S$, $\gamma_M$ is compared to an associated threshold $th_L$, $th_{VL}$, $th_{\beta S}$, $th_{V\beta}$, $th_{\gamma S}$, $th_{\gamma M}$. The threshold comparisons are advantageously combined with one another, for example using Boolean operands (AND, OR, etc.).

The computing unit 110 is configured to assign a first rank R=2 to first segments $\{S_{B12} ... S_{B45}\}$ of the polygonal chains $10_B$ of the first number M, and a second rank R=1 to second segments $\{S_{A12} ... S_{A78}\}$, $\{S_{C12} ... S_{C45}\}$ of the polygonal chains $10_A$, $10_C$ of the second number N. For example, the first rank R=2 corresponds to a level 2 of a possible road classification, in which the attributes (when present) level, number of lanes, and road type permit classification of the roads, for example.

The computing unit 110 is configured to carry out a route calculation based on the rank R of the segments in the sixth step 6, and in the seventh step 7 to output this calculation through the display 140, for example in the form of a graphical representation. For example, the route 30 to a destination address that has been entered is calculated starting from the current position, which is determined by means of the position finding unit 130. The computing unit 110 is configured to use the first segments $\{S_{B12} ... S_{B45}\}$ with priority over the second segments $\{S_{A12} ... S_{A78}\}$ $\{S_{C12} ... S_{C45}\}$ when calculating the route in the sixth step 6.

The invention is not restricted to the embodiments shown in Figures 1 through 5. For example, it is possible to evaluate different geometric properties of the polygonal chains by means of a different parameter. It is also possible to use databases other than the OpenStreetMap database. For example, a database that has been created from the OpenStreetMap database and is stored in a vehicle or in a central server may be used. The functionality of the navigation system shown in Fig. 4 can be used to especially good advantage for a motor vehicle.

List of reference characters

| | |
|---|---|
| 1, 2, 3, 4, 5, 6, 7 | Step |
| $10_A$, $10_B$, $10_C$, $10_D$ | Polygonal chain, highway |
| 20 | Map section |
| 30 | Route |
| 100 | Navigation system |
| 110, CPU | Computing unit |
| 120, DB | Database |
| 125 | Map data |
| 130, GPS | Position finding unit, GPS receiver |
| 140, MON | Display, touchscreen |
| A1 to A8, B1 to B5, C1 to C5, D1 to D12 | Vertex, node |
| $S_{A12}$ to $S_{A76}$, $S_{B12}$ to $S_{B45}$, $S_{C12}$ to $S_{C45}$, $S_{12}$ to $S_{1112}$ | Segment, line segment |
| $[A_1\,A_8]$, $[C_1\,C_5]$ | Additional line segment, distance |
| $\beta_2$, $\beta_3$, $\beta_4$, $\gamma_1$, $\gamma_2$, $\gamma_3$, $\gamma_4$ | Angle |
| $L$, $V_L$, $\beta_S$, $\beta_M$, $V_\beta$, $\gamma_S$, $\gamma_M$ | Parameter |
| $th_L$, $th_{VL}$, $th_{\beta S}$, $th_{V\beta}$, $th_{\gamma S}$, $th_{\gamma M}$ | Threshold |
| R | Rank, level |

**Claims**

1. Method for navigation by means of a route (30) comprising the steps:

    - retrieving map data (125) of a map section (20) from a database (120), wherein the map data (125) have polygonal chains ($10_A$, $10_B$, $10_C$, $10_D$) of ways, wherein each polygonal chain ($10_A$, $10_B$, $10_C$, $10_D$) has vertices ($\{A_1 ... A_8\}$, $\{B_1 ... B_5\}$, $\{C_1 ... C_5\}$, $\{D_1 ... D_{12}\}$) and segments ($\{S_{A12} ... S_{A78}\}$, $\{S_{B12} ... S_{B45}\}$, $\{S_{C12} ... S_{C45}\}$, $\{S_{12} ... S_{1112}\}$),

- determining for each of a plurality of the retrieved polygonal chains ($10_A$, $10_B$, $10_C$, $10_D$) a value of a parameter (L, $V_L$, $\beta_S$, $\beta_M$, $V_\beta$, $\gamma_S$, $\gamma_M$) of a geometric property of the polygonal chain ($10_A$, $10_B$, $10_C$, $10_D$) by means of a computing unit (110),

- assigning each of the plurality of the retrieved polygonal chains ($10_A$, $10_B$, $10_C$, $10_D$) to a first number (M) of polygonal chains ($10_B$) or a second number (N) of polygonal chains ($10_A$, $10_C$) by means of the computing unit (110) based on an evaluation of the values of the parameter (L, $V_L$, $\beta_S$, $\beta_M$, $V_\beta$, $\gamma_S$, $\gamma_M$),

- assigning by means of the computing unit (110) a first rank (R=2) to segments ($\{S_{B12} ... S_{B45}\}$) of the polygonal chains ($10_B$) of the first number (M), the segments ($\{S_{B12} ... S_{B45}\}$) of the polygonal chains ($10_B$) of the first number (M) being first segments ($\{S_{B12} ... S_{B45}\}$), and assigning by means of the computing unit (110) a second rank (R=1) to segments ($\{S_{A12} ... S_{A78}\}$, $\{S_{C12} ... S_{C45}\}$) of the polygonal chains (10A, 10C) of the second number (N), the segments ($\{S_{A12} ... S_{A78}\}$, $\{S_{C12} ... S_{C45}\}$) of the polygonal chains (10A, 10C) of the second number (N) being second segments (($S_{A12} ... S_{A78}\}$, $\{S_{C12} ... S_{C45}\}$), wherein the first segments ($\{S_{B12} ... S_{B45}\}$) have priority over the second segments ($\{S_{A12} ... S_{A78}\}$, ($S_{C12} ... S_{C45}$) for determining the route (30) and,

- calculating the route based on the first Rank (R=2) of the first segments (($S_{B12} ... S_{345}$) and the second Rank (R=1) of the second segments ($\{S_{A12} ... S_{A78}\}$, $\{S_{C12} ... S_{C45}\}$) after assignment of the first rank (R=2) and the second rank (R=1).

**2.** Method according to claim 1,

- wherein a length (L) of each polygonal chain ($10_A$, $10_B$, $10_C$, $10_D$) is determined as a geometric property in that the sum of the lengths of the segments ($\{S_{A12} ... S_{A78}\}$, $\{S_{B12} ... S_{B45}\}$, $\{S_{C12} ... S_{C45}\}$, $\{S_{12} ... S_{1112}\}$) is determined as the parameter (L),

- wherein each polygonal chain ($10_B$) is assigned to the first number (M) or to the second number (N) based on the length (L).

**3.** Method according to claim 1,

- wherein a length ratio ($V_L$) of lengths of the polygonal chain ($10_A$) is determined as a geometric property, wherein the length ratio ($V_L$) of a length of a line segment ($[A_1A_8]$) between a first vertex ($A_1$) and a last vertex ($A_8$) to a length (L) of the associated polygonal chain ($10_A$) is determined as the parameter ($V_L$), wherein the length (L) of the polygonal chain ($10_A$) is determined using the sum of the lengths of the segments ($\{S_{A12} ... S_{A78}\}$),

- wherein each polygonal chain ($10_B$) is assigned to the first number (M) or the second number (N) based on the length ratio ($V_L$).

**4.** Method according to claim 1,

- wherein an angle sum of each polygonal chain ($10_B$) is determined as a geometric property in that a sum of the angles ($\beta_2$, $\beta_3$, $\beta_4$) between two segments ($\{S_{B12} ... S_{B45}\}$) is determined as the parameter ($\beta_S$),

- wherein each polygonal chain ($10_B$) is assigned to the first number (M) or the second number (N) based on the sum ($\beta_S$) of the angles ($\beta_2$, $\beta_3$, $\beta_4$).

**5.** Method according to claim 1,

- wherein an average of the angles ($\beta_2$, $\beta_3$, $\beta_4$) of each polygonal chain ($10_B$) is determined as a geometric property in that the average of the angles ($\beta_2$, $\beta_3$, $\beta_4$) between two segments ($\{S_{B12} ... S_{B45}\}$) is determined as the parameter ($\beta_M$),

- wherein each polygonal chain ($10_B$) is assigned to the first number (M) or the second number (N) based on the average ($\beta_M$) of the angles ($\beta_2$, $\beta_3$, $\beta_4$) that was determined.

**6.** Method according to claim 1,

- wherein an angle-to-length ratio ($V_\beta$) is determined as a geometric property, wherein the ratio ($V_L$) of an average of the angles ($\beta_2$, $\beta_3$, $\beta_4$) to the length (L) of the polygonal chain ($10_A$) is determined as the parameter ($V_L$), wherein the length (L) of the polygonal chain ($10_A$) is determined using the sum of the lengths of the segments ($\{S_{A12} ... S_{A78}\}$),

- wherein each polygonal chain ($10_B$) is assigned to the first number (M) or to the second number (N) based on the angle-to-length ratio ($V_\beta$).

7. Method according to one or more of the preceding claims,

- wherein values of at least two parameters (L, $V_L$, $\beta_S$, $\beta_M$, $V_\beta$, $\gamma_S$, $\gamma_M$) of different geometric properties are determined, and the first number (M) and the second number (N) are ascertained based on the at least two parameters (L, $V_L$, $\beta_S$, $\beta_M$, $V_\beta$, $\gamma_S$, $\gamma_M$).

8. Navigation system for navigation by means of a route (30), having

- a database (120) that has retrievable map data (125) of a map section (20), wherein the map data (125) of the map section (20) have polygonal chains ($10_A$, $10_B$, $10_C$, $10_D$) of ways, wherein each polygonal chain ($10_A$, $10_B$, $10_C$, $10_D$) has vertices ($\{A_1 ... A_8\}$, $\{B_1 ... B_5\}$, $\{C_1 ... C_5\}$, $\{D_1 ... D_{12}\}$) and segments ($\{S_{A12} ... S_{A78}\}$, $\{S_{B12} ... S_{B45}\}$, $\{S_{C12} ... S_{C45}\}$, $\{S_{12} ... S_{1112}\}$),
- a computing unit (110) that is configured to determine for each of a plurality of the retrieved polygonal chains ($10_A$, $10_B$, $10_C$, $10_D$) a value of a parameter (L, $V_L$, $\beta_S$, $\beta_M$, $V_\beta$, $\gamma_S$, $\gamma_M$) of a geometric property of the polygonal chain ($10_A$, $10_B$, $10_C$, $10_D$),

wherein the computing unit (110) is configured to assign each of the plurality of polygonal chains ($10_A$, $10_B$, $10_C$, $10_D$) to a first number (M) of polygonal chains ($10_B$) or a second number (N) of polygonal chains ($10_A$, $10_C$) based on an evaluation of the values of the parameter (L, $V_L$, $\beta_S$, $\beta_M$, $V_\beta$, $\gamma_S$, $\gamma_M$),
wherein the computing unit (110) is configured to assign a first rank (R=2) to segments ($\{S_{B12} ... S_{B45}\}$) of the polygonal chains ($10_B$) of the first number (M), the segments ($\{S_{B12} ... S_{B45}\}$) of the polygonal chains ($10_B$) of the first number (M) being first segments ($\{S_{B12} ... S_{B45}\}$), and to assign a second rank (R=1) to segments ($\{S_{A12} ... S_{A78}\}$, $\{S_{C12} ... S_{C45}\}$ of the polygonal chains (10A, 10C) of the second number (N), the segments ($\{S_{A12} ... S_{A78}\}$, $\{S_{C12} ... S_{C45}\}$) of the polygonal chains (10A, 10C) of the second number (N) being second segments ($\{S_{A12} ... S_{A78}\}$, $\{S_{C12} ... S_{C45}\}$), wherein the first segments ($\{S_{B12} ... S_{B45}\}$) have priority over the second segments ($\{S_{A12} ... S_{A78}\}$, $\{S_{C12} ... S_{C45}\}$) for determination of the route (30), and
wherein the computing unit (110) is configured to calculate the route based on the first Rank (R=2) of the first segments (($S_{B12} ... S_{B45}$)) and the second Rank (R=1) of the second segments ($\{S_{A12} ... S_{A78}\}$, $\{S_{C12} ... S_{C45}\}$).

**Patentansprüche**

1. Verfahren für Navigation mittels einer Route (30), das die folgenden Schritte umfasst:

- Abrufen von Kartendaten (125) eines Kartenabschnitts (20) von einer Datenbank (120), wobei die Kartendaten (125) Polygonzüge ($10_A$, $10_B$, $10_C$, $10_D$) von Wegen aufweisen, wobei jeder Polygonzug ($10_A$, $10_B$, $10_C$, $10_D$) Knoten ($\{A_1 ... A_8\}$, $\{B_1 ... B_5\}$, $\{C_1 ... C_5\}$, $\{D_1 ... D_{12}\}$) und Strecken ($\{S_{A12} ... S_{A78}\}$, $\{S_{B12} ... S_{B45}\}$, $\{S_{C12} ... S_{C45}\}$, $\{S_{12} ... S_{1112}\}$) aufweist,
- für jede einer Vielzahl von abgerufenen Polygonzügen ($10_A$, $10_B$, $10_C$, $10_D$) Ermitteln eines Parameterwerts (L, $V_L$, $\beta_S$, $\beta_M$, $V_\beta$, $\gamma_S$, $\gamma_M$) einer geometrischen Eigenschaft des Polygonzugs ($10_A$, $10_B$, $10_C$, $10_D$) mittels einer Recheneinheit (110),
- Zuweisen jedes der mehreren abgerufenen Polygonzügen ($10_A$, $10_B$, $10_C$, $10_D$) zu einer ersten Anzahl (M) von Polygonzügen ($10_B$) oder einer zweiten Anzahl (N) von Polygonzügen ($10_A$, $10_C$) mittels der Recheneinheit (110) auf Basis einer Auswertung der Parameterwerte (L, $V_L$, $\beta_S$, $\beta_M$, $v_\beta$, $\gamma_S$, $\gamma_M$),
- Zuweisen eines ersten Rangs (R=2) zu Strecken ($\{S_{B12} ... S_{B45}\}$) der Polygonzüge ($10_B$) der ersten Anzahl (M) mittels der Recheneinheit (110), wobei die Strecken ($\{S_{B12} ... S_{B45}\}$) der Polygonzüge ($10_B$) der ersten Anzahl (M) erste Strecken ($\{S_{B12} ... S_{B45}\}$) sind, und Zuweisen eines zweiten Rangs (R=1) zu Strecken ($\{S_{A12} ... S_{A78}\}$, $\{S_{C12} ... S_{C45}\}$) der Polygonzüge ($10_A$, $10_C$) der zweiten Zahl (N) mittels der Recheneinheit (110), wobei die Strecken ($\{S_{A12} ... S_{A78}\}$, $\{S_{C12} ... S_{C45}\}$) der Polygonzüge ($10_A$, $10_C$) der zweiten Anzahl (N) zweite Strecken ($\{S_{A12} ... S_{A78}\}$, $(S_{C12} ... S_{C45})$) sind, wobei die ersten Strecken ($\{S_{B12} ... S_{B45}\}$) zur Ermittlung der Route (30) Priorität über die zweiten Strecken ($\{S_{A12} ... S_{A78}\}$, $\{S_{C12} ... S_{C45}\}$) haben, und,
- Berechnen der Route auf Basis des ersten Rangs (R=2) der ersten Strecken ($\{S_{B12} ... S_{B4S}\}$) und des zweiten Rangs (R=1) der zweiten Strecken ($\{S_{A12} ... S_{A78}\}$, $\{S_{C12} ... S_{C45}\}$) nach Zuweisung des ersten Rangs (R=2) und des zweiten Rangs (R=1).

**2.** Verfahren nach Anspruch 1,

- wobei eine Länge (L) jedes Polygonzugs ($10_A$, $10_B$, $10_C$, $10_D$) als eine geometrische Eigenschaft dadurch ermittelt wird, dass die Summe der Längen der Strecken ($\{S_{A12} ... S_{A78}\}$, $\{S_{B12} ... S_{B45}\}$, $\{S_{C12} ... S_{C45}\}$, $\{S_{12} ... S_{1112}\}$) als der Parameter (L) ermittelt wird,
- wobei jeder Polygonzug ($10_B$) auf Basis der Länge (L) der ersten Anzahl (M) oder der zweiten Anzahl (N) zugeordnet wird.

**3.** Verfahren nach Anspruch 1,

- wobei ein Längenverhältnis ($V_L$) der Längen des Polygonzugs ($40_A$) als eine geometrische Eigenschaft ermittelt wird, wobei das Längenverhältnis ($V_L$) einer Länge einer Linienstrecke ($[A_1A_8]$) zwischen einem ersten Knoten ($A_1$) und einem letzten Knoten ($A_8$) zu einer Länge (L) des zugehörigen Polygonzugs ($10_A$) als der Parameter ($V_L$) ermittelt wird, wobei die Länge (L) des Polygonzugs ($10_A$) mithilfe der Summe der Längen der Strecken ($\{S_{A12} ... S_{A78}\}$) ermittelt wird,
- wobei jeder Polygonzug ($10_B$) auf Basis des Längenverhältnisses ($V_L$) der ersten Anzahl (M) oder der zweiten Anzahl (N) zugeordnet wird.

**4.** Verfahren nach Anspruch 1,

- wobei eine Winkelsumme jedes Polygonzugs ($10_B$) als eine geometrische Eigenschaft dadurch ermittelt wird, dass eine Summe der Winkel ($\beta_2$, $\beta_3$, $\beta_4$) zwischen zwei Strecken ($\{S_{B12} ... S_{B45}\}$) als der Parameter ($\beta_S$) ermittelt wird,
- wobei jeder Polygonzug ($10_B$) der ersten Anzahl (M) oder der zweiten Anzahl (N) auf Basis der Summe ($\beta_S$) der Winkel ($\beta_2$, $\beta_3$, $\beta_4$) zugeordnet wird.

**5.** Verfahren nach Anspruch 1,

- wobei ein Durchschnitt der Winkel ($\beta_2$, $\beta_3$, $\beta_4$) jedes Polygonzugs ($10_B$) als eine geometrische Eigenschaft dadurch ermittelt wird, dass der Durchschnitt der Winkel ($\beta_2$, $\beta_3$, $\beta_4$) zwischen zwei Strecken ($\{S_{B12} ... S_{B45}\}$) als der Parameter ($\beta_M$) ermittelt wird,
- wobei jeder Polygonzug ($10_B$) der ersten Anzahl (M) oder der zweiten Anzahl (N) auf Basis des Durchschnitts ($\beta_M$) der Winkel ($\beta_2$, $\beta_3$, $\beta_4$) zugeordnet wird, der ermittelt wurde.

**6.** Verfahren nach Anspruch 1,

- wobei ein Verhältnis von Winkel zu Länge ($V_\beta$) als eine geometrische Eigenschaft ermittelt wird, wobei das Verhältnis ($V_L$) eines Durchschnitts der Winkel ($\beta_2$, $\beta_3$, $\beta_4$) zur Länge (L) des Polygonzugs ($10_A$) als der Parameter ($V_L$) ermittelt wird, wobei die Länge (L) des Polygonzugs ($10_A$) mithilfe der Summe der Längen der Strecken ($\{S_{A12} ... S_{A78}\}$) ermittelt wird,
- wobei jeder Polygonzug ($10_B$) auf Basis des Verhältnisses von Winkel zu Länge ($V_\beta$) der ersten Anzahl (M) oder der zweiten Anzahl (N) zugeordnet wird.

**7.** Verfahren nach einem oder mehreren der vorhergehenden Ansprüche,

- wobei Werte von mindestens zwei Parametern (L, $V_L$, $\beta_S$, $\beta_M$, $V_\beta$, $\gamma_S$, $\gamma_M$) von verschiedenen geometrischen Eigenschaften ermittelt werden und die erste Anzahl (M) und die zweite Anzahl (N) auf Basis der mindestens zwei Parameter (L, $V_L$, $\beta_S$, $\beta_M$, $V_\beta$, $\gamma_S$, $\gamma_M$) bestimmt werden.

**8.** Navigationssystem zur Navigation mittels einer Route (30) mit

- einer Datenbank (120), die abrufbare Kartendaten (125) eines Kartenabschnitts (20) aufweist, wobei die Kartendaten (125) des Kartenabschnitts (20) Polygonzüge ($10_A$, $10_B$, $10_C$, $10_D$) von Wegen aufweisen, wobei jeder Polygonzug ($10_A$, $10_B$, $10_C$, $10_D$) Knoten ($\{A_1 ... A_8\}$, $\{B_1 ... B_5\}$, $\{C_1 ... C_5\}$, $\{D_1 ... D_{12}\}$) und Strecken ($\{S_{A12} ... S_{A78}\}$, $\{S_{B12} ... S_{B45}\}$, $\{S_{C12} ... S_{C45}\}$, $\{S_{12} ... S_{1112}\}$) aufweist,
- einer Recheneinheit (110), die konfiguriert ist, um für jede einer Vielzahl von abgerufenen Polygonzügen ($10_A$, $10_B$, $10_C$, $10_D$) einen Parameterwert (L, $V_L$, $\beta_S$, $\beta_M$, $V_\beta$, $\gamma_S$, $\gamma_M$) einer geometrischen Eigenschaft der Polygonzüge ($10_A$, $10_B$, $10_C$, $10_D$) zu ermitteln,

wobei die Recheneinheit (110) konfiguriert ist, jede der Vielzahl von Polygonzügen ($10_A$, $10_B$, $10_C$, $10_D$) einer ersten Anzahl (M) von Polygonzügen ($10_B$) oder einer zweiten Anzahl (N) von Polygonzügen ($10_A$, $10_C$) auf Basis einer Auswertung der Parameterwerte (L, $V_L$, $\beta_S$, $\beta_M$, $V_\beta$, $\gamma_S$, $\gamma_M$) zuzuweisen,

wobei die Recheneinheit (110) konfiguriert ist, Strecken (\{$S_{B12}$ ... $S_{B45}$\}) der Polygonzüge ($10_B$) der ersten Anzahl (M) einen ersten Rang (R=2) zuzuweisen, wobei die Strecken (\{$S_{B12}$ ... $S_{B45}$\}) der Polygonzüge ($10_B$) der ersten Anzahl (M) erste Strecken (\{$S_{B12}$ ... $S_{B45}$\}) sind, und Strecken (\{$S_{A12}$ ... $S_{A78}$\}, \{$S_{C12}$ ... $S_{C45}$\}) der Polygonzüge ($10_A$, $10_C$) der zweiten Zahl (N) einen zweiten Rang (R=1) zuzuweisen, wobei die Strecken (\{$S_{A12}$ ... $S_{A78}$\}, \{$S_{C12}$ ... $S_{C45}$\}) der Polygonzüge ($10_A$, $10_C$) der zweiten Anzahl (N) zweite Strecken (\{$S_{A12}$ ... $S_{A78}$\}, \{$S_{C12}$ ... $S_{C45}$\}) sind, wobei die ersten Strecken (\{$S_{S12}$ ... $S_{B45}$\}) Priorität über die zweiten Strecken (\{$S_{A12}$ ... $S_{A78}$\}, \{$S_{C12}$ ... $S_{C45}$\}) zur Ermittlung der Route (30) haben, und

wobei die Recheneinheit (110) konfiguriert ist, die Route auf Basis des ersten Rangs (R=2) der ersten Strecken (\{$S_{B12}$ ... $S_{B45}$\}) und des zweiten Rangs (R=1) der zweiten Strecken (\{$S_{A12}$ ... $S_{A78}$\}, \{$S_{C12}$ ... $S_{C45}$\}) zu berechnen.

## Revendications

1.  Procédé de navigation à l'aide d'un itinéraire (30) comprenant les étapes suivantes :

    - la récupération de données de carte (125) d'une section de carte (20) d'une base de données (120), dans lequel les données de carte (125) ont des chaînes polygonales ($10_A$, $10_B$, $10_C$, $10_D$) de voies, dans lequel chaque chaîne polygonale ($10_A$, $10_B$, $10_C$, $10_D$) a des sommets (\{$A_1$... $A_8$\}, \{$B_1$, ...$B_5$\}, \{$C_1$, ...$C_5$\}, \{$D_1$, ...$D_{12}$\}) et des segments (\{$S_{A12}$... $S_{A78}$\}, \{$S_{B12}$, ...$S_{B45}$\}, \{$S_{C12}$, ...$S_{C45}$\}, \{$S_{12}$, ...$S_{1112}$\}),
    - la détermination pour chacune d'une pluralité de chaînes polygonales récupérées ($10_A$, $10_B$, $10_C$, $10_D$), d'une valeur d'un paramètre (L, $V_L$, $\beta_S$, $\beta_M$, $V_\beta$, $Y_S$, $Y_M$) d'une propriété géométrique de la chaîne polygonale ($10_A$, $10_B$, $10_C$, $10_D$) à l'aide d'une unité informatique (110),
    - l'attribution de chacune de la pluralité de chaînes polygonales récupérées ($10_A$, $10_B$, $10_C$, $10_D$) à un premier nombre (M) de chaînes polygonales ($10_B$) ou à un second nombre (N) de chaînes polygonales ($10_A$, $10_C$) à l'aide de l'unité informatique (110) sur la base d'une évaluation des valeurs du paramètre (L, $V_L$, $\beta_S$, $\beta_M$, $V_\beta$, $Y_S$, $Y_M$),
    - l'attribution à l'aide de l'unité informatique (110) d'un premier rang (R=2) aux segments (\{$S_{B12}$...$S_{B45}$\}) des chaînes polygonales ($10_B$) du premier nombre (M), les segments (\{$S_{B12}$...$S_{B45}$\}) des chaînes polygonales ($10_B$) du premier nombre (M) étant des premiers segments (\{$S_{B12}$...$S_{B45}$\}) et l'attribution à l'aide de l'unité informatique (110) d'un second rang (R=1) aux segments (\{$S_{A12}$...$S_{A78}$\}, \{$S_{C12}$...$S_{C45}$\}) des chaînes polygonales ($10_A$, $10_C$) du second nombre (N), les segments (\{$S_{A12}$...$S_{A78}$\}, \{$S_{C12}$...$S_{C45}$\}) des chaînes polygonales (10A, $10_C$) du second nombre (N) étant des seconds segments (\{$S_{A12}$...$S_{A78}$\}, \{$S_{C12}$...$S_{C45}$\}) dans lequel les premiers segments (\{$S_{B12}$...$S_{B45}$\}) ont la priorité sur les seconds segments (\{$S_{A12}$...$S_{A78}$\}, \{$S_{C12}$...$S_{C45}$\}) pour déterminer l'itinéraire (30) et
    - le calcul de l'itinéraire sur la base du premier rang (R=2) des premiers segments (\{$S_{B12}$...$S_{B45}$\}) et du second rang (R=1) des seconds segments (\{$S_{A12}$...$S_{A78}$\}, \{$S_{C12}$...$S_{C45}$\}) après l'attribution du premier rang (R=2) et du second rang (R=1).

2.  Procédé selon la revendication 1,

    - dans lequel une longueur (L) de chaque chaîne polygonale ($10_A$, $10_B$, $10_C$, $10_D$) est déterminée comme une propriété géométrique en ce que la somme des longueurs des segments (\{$S_{A12}$...$S_{A78}$\}, \{$S_{B12}$...$S_{B45}$\}, \{$S_{C12}$...$S_{C45}$\}, \{$S_{12}$...$S_{1112}$\}) est déterminée comme le paramètre (L),
    - dans lequel chaque chaîne polygonale ($10_B$) est attribuée au premier nombre (M) ou au second nombre (N) sur la base de la longueur (L).

3.  Procédé selon la revendication 1,

    - dans lequel un rapport ($V_L$) de longueurs de la chaîne polygonale ($10_A$) est déterminé comme une propriété géométrique, dans lequel le rapport de longueur ($V_L$) entre une longueur d'un segment de ligne ([$A_1A_8$]) entre un premier sommet ($A_1$) et un dernier sommet ($A_8$) et une longueur (L) de la chaîne polygonale associée ($10_A$) est déterminée comme le paramètre ($V_L$), dans lequel la longueur (L) de la chaîne polygonale ($10_A$) est déterminée en utilisant la somme des longueurs des segments (\{$S_{A12}$...$S_{A78}$\}),
    - dans lequel chaque chaîne polygonale ($10_B$) est attribuée au premier nombre (M) ou au second nombre (N) sur la base du rapport de longueur ($V_L$).

4. Procédé selon la revendication 1,

- dans lequel une somme d'angle de chaque chaîne polygonale ($10_B$) est déterminée comme une propriété géométrique en ce qu'une somme des angles ($\beta_2$, $\beta_3$, $\beta_4$) entre deux segments ($\{S_{B12}...S_{B45}\}$) est déterminée comme le paramètre ($\beta_S$),
- dans lequel chaque chaîne polygonale ($10_B$) est attribuée au premier nombre (M) ou au second nombre (N) sur la base de la somme ($\beta_S$) des angles ($\beta_2$, $\beta_3$, $\beta_4$).

5. Procédé selon la revendication 1,

- dans lequel une moyenne des angles ($\beta_2$, $\beta_3$, $\beta_4$) de chaque chaîne polygonale ($10_B$) est déterminée comme une propriété géométrique en ce que la moyenne des angles ($\beta_2$, $\beta_3$, $\beta_4$) entre deux segments ($\{S_{B12}$-$S_{B45}\}$) est déterminée comme le paramètre ($\beta_M$),
- dans lequel chaque chaîne polygonale ($10_B$) est attribuée au premier nombre (M) ou au second nombre (N) sur la base de la moyenne ($\beta_M$) des angles ($\beta_2$, $\beta_3$, $\beta_4$) qui a été déterminée.

6. Procédé selon la revendication 1,

- dans lequel un rapport entre l'angle et la longueur (Vp) est déterminé comme une propriété géométrique, dans lequel le rapport ($V_L$) entre une moyenne des angles ($\beta_2$, $\beta_3$, $\beta_4$) et la longueur (L) de la chaîne polygonale ($10_A$) est déterminé comme le paramètre ($V_L$), dans lequel la longueur (L) de la chaîne polygonale ($10_A$) est déterminée en utilisant la somme des longueurs des segments ($\{S_{A12}...S_{A78}\}$),
- dans lequel chaque chaîne polygonale ($10_B$) est attribuée au premier nombre (M) ou au second nombre (N) sur la base du rapport angle longueur (Vp).

7. Procédé selon l'une ou plusieurs des revendications précédentes,

- dans lequel des valeurs d'au moins deux paramètres (L, $V_L$, $\beta_S$, $\beta_M$, $V_\beta$, $Y_S$, $Y_M$) de différentes propriétés géométriques sont déterminées, et le premier nombre (M) et le second nombre (N) sont vérifiés sur la base des au moins deux paramètres (L, $V_L$, $\beta_S$, $\beta_M$, $V_\beta$, $Y_S$, $Y_M$).

8. Système de navigation à l'aide d'un itinéraire (30) présentant

- une base de données (120) qui a des données de carte récupérables (125) d'une section de carte (20), dans lequel les données de carte (125) de la section de carte (20) ont des chaînes polygonales ($10_A$, $10_B$, $10_C$, $10_D$) de voies, dans lequel chaque chaîne polygonale ($10_A$, $10_B$, $10_C$, $10_D$) a des sommets ($\{A_1... A_8\}$, $\{B_1... B_5\}$, $\{C_1 ...C_5\}$, $\{D_1 ...D_{12}\}$) et des segments ($\{S_{A12}... S_{A78}\}$, $\{S_{B12} ... S_{B45}\}$, $\{S_{C12} ... S_{C45}\}$, $\{S_{12} ... S_{1112}\}$),
- une unité informatique (110) qui est configurée pour déterminer pour chacune d'une pluralité des chaînes polygonales récupérées ($10_A$, $10_B$, $10_C$, $10_D$) une valeur d'un paramètre (L, $V_L$, $\beta_S$, $\beta_M$, $V_\beta$, $Y_S$, $Y_M$) d'une propriété géométrique de la chaîne polygonale ($10_A$, $10_B$, $10_C$, $10_D$),
- dans lequel l'unité informatique (110) est configurée pour attribuer chacune de la pluralité de chaînes polygonales ($10_A$, $10_B$, $10_C$, $10_D$) à un premier nombre (M) de chaînes polygonales ($10_B$) ou à un second nombre (N) de chaînes polygonales ($10_A$, $10_C$) sur la base d'une évaluation des valeurs du paramètre (L, $V_L$, $\beta_S$, $\beta_M$, $V_\beta$, $Y_S$, $Y_M$),

dans lequel l'unité informatique (110) est configurée pour attribuer un premier rang (R=2) aux segments ($\{S_{B12} ...S_{B45}\}$), des chaînes polygonales ($10_B$) du premier nombre (M), les segments ($\{S_{B12} ...S_{B45}\}$) des chaînes polygonales ($10_B$) du premier nombre (M) étant des premiers segments ($\{S_{B12} ...S_{B45}\}$), et pour attribuer un second rang (R=1) aux segments ($\{S_{A12} ... S_{A78}\}$, $\{S_{C12} ...S_{C45}\}$) des chaînes polygonales ($10_A$, $10_C$) du second nombre (N), les segments ($\{S_{A12} ...S_{A78}\}$, $\{S_{C12} ... S_{C45}\}$) des chaînes polygonales (10A, 10C) du second nombre (N) étant des seconds segments ($\{S_{A12} ...S_{A78}\}$, $\{S_{C12} ...S_{C45}\}$), dans lequel les premiers segments ($\{S_{B12} ... S_{B45}\}$) ont la priorité sur les seconds segments ($\{S_{A12} ...S_{A78}\}$, $\{S_{C12} ...S_{C45}\}$) pour la détermination de l'itinéraire (30), et dans lequel l'unité informatique (110) est configurée pour calculer l'itinéraire sur la base du premier rang (R=2) des premiers segments ($\{S_{B12} ...S_{B45}\}$) et du second rang (R=1) des seconds segments ($\{S_{A12} ...S_{A78}\}$, $\{S_{C12} ...S_{C45}\}$).

FIG.1

FIG.2c

FIG.2b

FIG.2a

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4104351 A1

- GB 2443472 A

**Non-patent literature cited in the description**

- **E. ZIMMERMANN.** OpenStreetMap in ArcGIS: Automatisierte Datenaufbereitung für Netzwerkanalysen. *Bachelor's Thesis, Karlsruhe University of Applied Sciences,* 30 June 2010

- **M.HENTSCHEL ; B.WAGNER.** Autonomous Robot Navigation Based on OpenStreetMap Geodata. *ITSC,* 2010, 1645-1650